# EUROPEAN PATENT APPLICATION

(11) **EP 4 711 181 A1**
(43) Date of publication of application: **18.03.2026**
(21) Application number: 25201746.2
(22) Date of filing: 11.09.2025
(51) Int. Cl.: B60L 3/00, B60L 7/24, B60W 10/08, B60W 30/09, B60W 10/18

(54) **MOTOR CONTROL UNIT AND METHOD FOR SHORTENING EMERGENCY BRAKING DISTANCE, AND ELECTRIC VEHICLE**

(30) Priority: 14.09.2024 CN 202411295975
(71) Applicant: Huawei Digital Power Technologies Co., Ltd., Shenzhen, Guangdong 518043 (CN)
(72) Inventor: LU, Chunhong, Shenzhen, 518043 (CN); SHEN, Tianmin, Shenzhen, 518043 (CN); ZHAO, Yu, Shenzhen, 518043 (CN)
(74) Representative: Gill Jennings & Every LLP

(57) **Abstract**

A motor control unit and control method for shortening an emergency braking distance, and an electric vehicle are provided, relate to the field of new energy vehicles, and may be applied to a pure electric vehicle and a hybrid vehicle. The motor control unit is used in an electric vehicle, the motor control unit is configured to control a drive motor of the electric vehicle to output a positive torque to drive a wheel of the electric vehicle, the electric vehicle further includes an automatic emergency braking system, and the automatic emergency braking system is configured to output a braking force after being triggered, to brake the electric vehicle. The motor control unit is further configured to control the drive motor to output a reverse torque after the automatic emergency braking system is triggered and before the automatic emergency braking system outputs the braking force in a traveling process of the electric vehicle. A direction of the reverse torque is opposite to a rotation speed direction of the drive motor. According to this solution, a braking distance of AEB is shortened or an AEB intervention vehicle speed is increased when a braking distance of AEB remains unchanged, to reduce a false trigger rate of AEB, and improve vehicle safety.

## Description

### TECHNICAL FIELD

This application relates to the field of new energy vehicles, and more specifically, to a motor control unit and method for shortening an emergency braking distance, and an electric vehicle.

### BACKGROUND

An active safety configuration of a vehicle attracts more attention. An automatic emergency braking (automatic emergency braking, AEB) system measures a distance from a front vehicle or an obstacle by using a vehicle sensing system such as a camera or a radar, and then compares the measured distance with an alarm distance and a safety distance by using a data analysis module. When the measured distance is less than the alarm distance, an alarm prompt is given. When the measured distance is less than the safety distance, the AEB system is started, to automatically brake the vehicle, thereby ensuring safe travel.

A braking distance of AEB directly affects safety of the vehicle. To avoid false triggering of AEB, a recognition distance is usually limited. In this case, the braking distance usually needs to be reduced. In a conventional AEB architecture, a vehicle relies on a braking system to complete an entire process of AEB, and the vehicle braking system requires a hydraulic system to build up pressure, so that a brake caliper clamps a brake disc, to generate a vehicle braking force. This process usually needs to take a specific period of time, pressure build-up time is long, and a braking distance of AEB is increased due to non-timely braking.

Therefore, how to shorten an emergency braking distance of an electric vehicle is a problem to be resolved.

### SUMMARY

This application provides a motor control unit and method for shortening an emergency braking distance, and an electric vehicle. Within a time period in which a hydraulic braking force is not completely built up when AEB is triggered, a drive motor quickly responds to output a braking torque to reduce a vehicle speed, and a drive system and a braking system cooperate with each other, to shorten a braking distance of AEB or increase an AEB intervention vehicle speed when a braking distance of AEB remains unchanged, thereby reducing a false trigger rate of AEB, and improving vehicle safety.

According to a first aspect, this application provides a motor control unit for shortening an emergency braking distance. The motor control unit is used in an electric vehicle, the motor control unit is configured to control a drive motor of the electric vehicle to output a positive torque to drive a wheel of the electric vehicle, the electric vehicle further includes an automatic emergency braking system, and the automatic emergency braking system is configured to output a braking force after being triggered, to brake the electric vehicle. The motor control unit is further configured to control the drive motor to output a reverse torque after the automatic emergency braking system is triggered and before the automatic emergency braking system outputs the braking force in a traveling process of the electric vehicle. A direction of the reverse torque is opposite to a rotation speed direction of the drive motor.

The motor control unit is applicable to the electric vehicle or a hybrid vehicle. The electric vehicle may be of a distributed motor or centralized motor architecture, and has a plurality of drive motors and a plurality of motor control units. The motor control unit may be any one of the plurality of motor control units. The drive motor may be a wheel-side motor or a wheel hub motor, and the drive motor may independently drive a wheel of the vehicle. The motor control unit may output a three-phase alternating current to the drive motor, to control the drive motor to output a torque. The drive motor includes a stator winding and a rotor. The motor control unit outputs an alternating current to a three-phase stator winding, to control the motor to output the torque. The motor control unit can change intensity and a direction of a magnetic field of a stator by adjusting a magnitude of a current input into the stator winding and a phase of the three-phase current, thereby changing an interaction force between the stator and the rotor, that is, controlling the torque output by the drive motor.

It should be understood that, for the electric vehicle having the plurality of drive motors, if AEB is triggered, drive motors that drive coaxial wheels, for example, two drive motors that respectively drive two front wheels or two drive motors that respectively drive two rear wheels, need to output equal reverse torques, to avoid a case in which a yaw torque occurs, and consequently, the vehicle is out of control. Therefore, in a case of an electric vehicle in which a plurality of motor control units respectively control a plurality of drive motors, the motor control units need to control reverse torques output by the drive motors to be equal to reverse torques output by drive motors that drive coaxial wheels.

The automatic emergency braking AEB system is an active safety function of the electric vehicle, and may automatically brake in an emergency. For example, the AEB system automatically applies braking when detecting that a distance between the electric vehicle and an obstacle (a pedestrian, a vehicle, or the like) is less than a safety distance, or increases a braking force when a driver does not apply enough braking, so that the electric vehicle decelerates and brakes the vehicle. The AEB system may be provided with a separate controller, or may be integrated in a vehicle control unit or an advanced driver assistance system (advanced driver assistance system, ADAS) controller. When determining that the AEB system needs to be activated, the controller of the AEB system sends an AEB system enable signal to the vehicle control unit and/or the motor control unit. The AEB system enable signal indicates to trigger AEB to make an automatic stop.

In this application, that the AEB system outputs the braking force to the electric vehicle may be that a controller integrated with the AEB system directly or indirectly controls a braking system of the electric vehicle to output the braking force. Details are not described again below.

The reverse torque may also be referred to as a negative torque. In a forward traveling process of the electric vehicle, the positive torque is used to drive the vehicle, and the negative torque is used to brake the vehicle. In a reversing process of the electric vehicle, the positive torque is used to brake the vehicle, and the negative torque is used to drive the vehicle. The motor control unit may change the phase of the three-phase current output to the drive motor, so that the rotor cuts a magnetic field generated by the stator winding. Kinetic energy of the rotor is converted into electric energy and input to a power battery. In this case, the drive motor outputs the negative torque. The motor control unit changes a magnitude of the three-phase current output to the motor, to increase or decrease the positive torque or the negative torque output by the motor. It should be understood that, in this application, an example in which the electric vehicle travels forward is used for description. In a scenario in which the electric vehicle is reversed, refer to similar descriptions. A direction of a torque output by the drive motor may be correspondingly modified, and functions of the torque need to be consistent.

It should be understood that when AEB is activated, the electric vehicle automatically brakes, and the braking system of the electric vehicle is controlled to output the braking force to stop the electric vehicle. Usually, the braking system needs to build up pressure by using a hydraulic system, to output the braking force. Therefore, it needs to take a period of time for the braking system from starting to build up hydraulic pressure to outputting the braking force. In this period of time, the electric vehicle is not decelerated by the braking force. However, the drive motor does not need to build up pressure, and a torque control response time period is less than a time period in which the braking system builds up pressure. Therefore, the motor control unit may control the drive motor to output the reverse torque when the braking system builds up pressure, to quickly brake the electric vehicle.

According to the solution of this application, when AEB is triggered, the motor control unit controls, by using a quick response, the drive motor to output the reverse torque, to compensate for a lack of a hydraulic braking force in specific duration. In this way, a braking distance in a vehicle AEB scenario is shortened without increasing hardware costs of the vehicle, and vehicle safety is improved.

With reference to the first aspect, in some implementations of the first aspect, the motor control unit is configured to control the drive motor to output the reverse torque until a speed of the electric vehicle decreases to zero.

In a possible embodiment, the motor control unit may control the drive motor to output the reverse torque, in a time period of an entire process from triggering of AEB to automatic braking to a stop. Before outputting the braking force, the braking system may output a large reverse torque to compensate for a blank time period of the braking force. After starting to output the braking force, the braking system decreases the reverse torque. If the electric controller operates in the entire process, a long-time operation capability of the drive motor and a kinetic energy recovery capability of the power battery also need to be considered.

According to the solution of this application, in the AEB scenario, a drive system and the braking system cooperate to operate, so that the electric vehicle quickly achieves a target deceleration, to shorten an emergency braking distance, and improve vehicle safety.

With reference to the first aspect, in some implementations of the first aspect, in a process in which the motor control unit controls the drive motor to output the reverse torque, a deceleration of the electric vehicle before the emergency braking system outputs the braking force is less than a deceleration of the electric vehicle after the emergency braking system outputs the braking force.

The reverse torque output by the drive motor should not be too large. After the emergency braking system starts to output the braking force, the deceleration of the electric vehicle increases quickly. The braking system needs to mainly perform braking, to avoid a case in which the wheel is locked and traveling safety of the electric vehicle is affected.

According to the solution of this application, in the AEB scenario, the drive system and the braking system cooperate to work, to shorten the emergency braking distance. In addition, the braking system precedes, to avoid locking the wheel due to simultaneous functioning, thereby improving vehicle safety.

With reference to the first aspect, in some implementations of the first aspect, the motor control unit is configured to: in a process of controlling the drive motor to output the reverse torque, in response to that the automatic emergency braking system outputs the braking force and a deceleration of the electric vehicle is greater than or equal to a preset deceleration, control, by the motor control unit, the drive motor to stop outputting the reverse torque.

The motor control unit may be signal-connected to the braking system or the vehicle control unit. When the automatic emergency braking system starts to output the braking force, the deceleration of the electric vehicle increases quickly. When the braking force output by the braking system causes the electric vehicle to generate an enough deceleration, the motor control unit may control the drive motor to stop outputting the reverse torque and exit braking in a timely manner, to avoid a case in which there is an overlap with the braking force output by the braking system and the wheel is locked.

According to the solution of this application, in the AEB scenario, the drive system and the braking system cooperate to work, to sequentially generate the braking force, so that the electric vehicle quickly reaches the target deceleration, to shorten the emergency braking distance. In addition, the braking system precedes, to avoid locking the wheel due to simultaneous functioning, thereby improving vehicle safety.

With reference to the first aspect, in some implementations of the first aspect, in a process in which the motor control unit is configured to control the drive motor to output the reverse torque before the automatic emergency braking system outputs the braking force, the deceleration of the electric vehicle is less than the preset deceleration or a deceleration of the drive motor is less than the preset deceleration.

The deceleration of the drive motor may be understood as a deceleration of a motor rotation speed. There is usually a correspondence between the motor rotation speed and a vehicle speed. Therefore, the deceleration of the electric vehicle may be calculated based on the deceleration of the motor rotation speed.

The reverse torque output by the drive motor should not be too large. After the emergency braking system starts to output the braking force, the deceleration of the electric vehicle increases quickly. The braking system needs to mainly perform braking, to avoid a case in which the wheel is locked and traveling safety of the electric vehicle is affected.

According to the solution of this application, in the AEB scenario, the drive system and the braking system cooperate to work, to shorten the emergency braking distance. In addition, the braking system precedes, to avoid locking the wheel due to simultaneous functioning, thereby improving vehicle safety.

With reference to the first aspect, in some implementations of the first aspect, the motor control unit is configured to: in a process in which the braking force output by the automatic emergency braking system increases from zero, control, by the motor control unit, the reverse torque output by the drive motor to decrease to zero.

Because it needs to take a specific period of time for the braking system of the electric vehicle to build up the hydraulic pressure to output the braking force, in this period of time, the motor control unit needs to control the drive motor to output the reverse torque for compensation. When the braking force output after the braking system of the electric vehicle builds up the braking force gradually increases, the reverse torque of the drive motor may gradually stop, and the braking system continues to brake to complete a remaining emergency braking process. Braking by the drive system smoothly transitions to braking by braking.

According to the solution of this application, in the AEB scenario, the drive system and the braking system cooperate to operate, and outputting the reverse torque by the drive system smoothly transitions to outputting the braking force by the braking system, thereby shortening the emergency braking distance and improving vehicle safety.

With reference to the first aspect, in some implementations of the first aspect, the motor control unit is configured to: after the drive motor outputs the reverse torque for preset duration, control the drive motor to stop outputting the torque. A deceleration of the electric vehicle within the preset duration is less than a deceleration of the electric vehicle in a process in which the automatic emergency braking system outputs the braking force after the preset duration.

Because it needs to take a specific period of time for the braking system of the electric vehicle to build up the hydraulic pressure to output the braking force, in this period of time, the motor control unit needs to control the drive motor to output the reverse torque for compensation. After controlling the drive motor to output the reverse torque for the preset duration, the motor control unit controls the drive motor to stop outputting the torque.

It should be understood that the preset duration may be equal to the time period in which the braking system builds up pressure, that is, duration from receiving the AEB system enable signal to outputting the braking force by the braking system. The preset duration may be obtained through calibration based on performance of the vehicle braking system.

The motor control unit may not be signal-connected to the braking system, and the motor control unit may not need to detect when the braking system completes pressure build-up to output the braking force, but only needs to control, within the preset duration after receiving the AEB system enable signal, the drive motor to output the reverse torque, and after outputting the reverse torque for the preset duration, controls the drive motor to stop outputting the torque, to avoid overlapping with the braking force output by the braking system.

In a possible embodiment, the preset duration is less than or equal to 500 milliseconds.

The electric vehicle relies on the braking system to complete an entire process of AEB, and the braking system requires a hydraulic system to build up pressure, so that a brake caliper clamps a brake disc, to generate a vehicle braking force. Such a pressure build-up process usually needs to take 200 milliseconds to 500 milliseconds, and a pressure build-up time period is long. During this period of time, the motor control unit may control the drive motor to output the reverse torque to brake the electric vehicle. Therefore, in a possible setting manner, the preset duration is less than or equal to 500 milliseconds.

According to the solution of this application, in the AEB scenario, the drive system and the braking system cooperate to work, to sequentially generate the braking force, so that the electric vehicle quickly reaches the target deceleration, to shorten the emergency braking distance. In addition, the braking system precedes, to avoid locking the wheel due to simultaneous functioning, thereby improving vehicle safety.

With reference to the first aspect, in some implementations of the first aspect, the motor control unit is configured to control a magnitude of the reverse torque output by the drive motor to be less than or equal to a torque limit.

The torque limit is a maximum reverse torque capability that can be output by the drive motor at an AEB trigger moment. The torque limit is related to a capability of hardware and a safety value of the reverse torque output by the drive motor when the hardware and the vehicle safety are ensured at the vehicle speed. The torque limit may be obtained through calibration based on vehicle performance of the vehicle, and may be preset.

According to the solution of this application, in an AEB trigger scenario, the motor control unit controls the drive motor to output the reverse torque as much as possible to brake the electric vehicle, so that safety of the electric vehicle is ensured as much as possible while the electric vehicle quickly achieves the target deceleration, thereby shortening the emergency braking distance and improving safety.

With reference to the first aspect, in some implementations of the first aspect, after the automatic emergency braking system of the electric vehicle is triggered and before the automatic emergency braking system outputs the braking force in the traveling process of the electric vehicle, the motor control unit is configured to receive a reverse torque signal. A reverse torque indicated by the reverse torque signal has a preset value. The motor control unit is configured to: in response to that the reverse torque indicated by the reverse torque signal is less than or equal to the torque limit, control the drive motor to output the reverse torque indicated by the reverse torque signal. The motor control unit is configured to: in response to that the reverse torque indicated by the reverse torque signal is greater than the torque limit, control the drive motor to output a reverse torque corresponding to the torque limit.

The motor control unit is configured to receive a reverse torque signal of the vehicle control unit. The reverse torque signal indicates a target torque.

When AEB is triggered, the controller integrated with the AEB system sends the AEB system enable signal and a required total braking force to the vehicle control unit and a controller of the braking system. After receiving the AEB system enable signal and the total braking force, the vehicle control unit transparently transmits the AEB system enable signal and the total braking force to the motor control unit. After the motor control unit receives the reverse torque signal sent by the vehicle control unit, the reverse torque signal indicates a braking force that is allocated to the drive system and that needs to be output, and the motor control unit determines, based on the reverse torque signal, a magnitude of a reverse torque that finally needs to be output.

When an absolute value of the target torque is greater than an absolute value of the torque limit, the motor control unit outputs the reverse torque corresponding to the torque limit. When the absolute value of the target torque is less than or equal to the absolute value of the torque limit, the motor control unit outputs the target torque indicated by the reverse torque signal.

Regardless of the vehicle speed of the electric vehicle, after AEB is triggered, it is usually expected that a deceleration generated during emergency braking is as large as possible. Therefore, the target torque has a preset value, and the preset value may correspond to an attachment coefficient of contact with the wheel. When the drive motor outputs the reverse torque corresponding to the preset value, the electric vehicle can obtain a braking force and a deceleration that are as large as possible.

After receiving the AEB system enable signal, the motor control unit immediately controls the drive motor to generate a reverse torque that does not exceed a total braking force determined by the AEB system. The reverse torque is the maximum reverse torque capability of the drive motor and a minimum absolute value of the total braking force. When the absolute value of the target torque indicated by the vehicle control unit is greater than the absolute value of the torque limit, it indicates that the drive motor cannot achieve a target indicated by the vehicle control unit, and can only output the reverse torque as much as possible. In this case, the motor control unit controls the drive motor to output the reverse torque corresponding to the torque limit. When the absolute value of the target torque indicated by the vehicle control unit is less than or equal to the absolute value of the torque limit, it indicates that the drive motor is capable of completing a target braking force allocated by the vehicle control unit. In this case, only the target torque allocated by the vehicle control unit needs to be output. In this case, the motor control unit controls the drive motor to output the target torque indicated by the reverse torque signal.

According to the solution of this application, the reverse torque is output within a capability range of the drive system, so that safety of the electric vehicle is ensured as much as possible while the electric vehicle quickly achieves the target deceleration, thereby shortening the emergency braking distance and improving safety.

With reference to the first aspect, in some implementations of the first aspect, in a process in which the motor control unit is configured to control the drive motor to output the reverse torque, a magnitude of the reverse torque output by the drive motor does not change with an opening degree of an accelerator pedal of the electric vehicle.

The motor control unit is configured to: in the traveling process of the electric vehicle, control the drive motor to output a torque indicated by the opening degree of the accelerator pedal of the electric vehicle. In response to the AEB system enable signal, the motor control unit controls the torque output by the drive motor to be different from the torque indicated by the opening degree of the accelerator pedal.

When the AEB system is not triggered, the motor control unit controls, based on the torque indicated by the opening degree of the accelerator pedal, the drive motor to output the torque, so that the electric vehicle travels normally. When the AEB system is triggered, the motor control unit performs AEB braking control in response to the AEB system enable signal, and does not respond to the opening degree of the accelerator pedal to control the drive motor, but directly adjusts the torque output by the drive motor. In an emergency, the driver may not respond and still presses down the accelerator pedal. If AEB is not triggered, the motor control unit responds to the opening degree of the accelerator pedal to control the drive motor to output the positive torque, and the electric vehicle still travels forward, causing an accident. Therefore, when AEB is triggered, the motor control unit controls the torque output by the drive motor to be different from the torque indicated by the opening degree of the accelerator pedal, and controls the drive motor to output the reverse torque.

According to the solution of this application, the motor control unit directly performs control during emergency braking, so that a communication delay is low, a response time period is short, and safety of the electric vehicle is improved.

With reference to the first aspect, in some implementations of the first aspect, the motor control unit is configured to: within the preset duration, in response to that an actual deceleration that is of the drive motor and that is indicated by a resolver sensor is less than a target deceleration, control the drive motor to increase the output reverse torque.

After receiving the AEB trigger signal, the motor control unit obtains the target deceleration indicated by the vehicle control unit, obtains the actual deceleration of the drive motor based on a resolver signal sent by the resolver sensor, performs closed-loop control on the target deceleration of the drive motor and the actual deceleration of the drive motor, adjusts the torque of the drive motor, and continuously performs closed-loop control in an emergency braking process. When the actual deceleration that is of the drive motor and that is indicated by the resolver sensor is less than the target deceleration indicated by the vehicle control unit, the motor control unit increases an output current to control the drive motor to increase the output reverse torque. When the actual deceleration that is of the drive motor and that is indicated by the resolver sensor is greater than the target deceleration indicated by the vehicle control unit, the motor control unit decreases the output current to control the drive motor to reduce the output reverse torque.

In this application, increasing the output reverse torque may be understood as increasing the torque absolute value of the reverse torque. Decreasing the output reverse torque may be understood as decreasing the torque absolute value of the reverse torque.

According to the solution of this application, precise closed-loop control is performed, by using a signal of the resolver sensor, on the torque output by the drive motor, so that after the braking force of the braking system is built up, the motor control unit can perform closed-loop control, to quickly stop the reverse torque, so that a braking force output by the drive system smoothly cooperates with the braking force output by the braking system, thereby improving vehicle safety.

With reference to the first aspect, in some implementations of the first aspect, the motor control unit is further configured to: in a process in which the drive motor outputs the reverse torque, in response to that the automatic emergency braking system is disabled, control the drive motor to stop outputting the reverse torque.

In the process in which the drive motor outputs the reverse torque, if the AEB process ends in advance, the motor control unit controls the drive motor to stop outputting the reverse torque.

In a possible embodiment, the reverse torque output by the drive motor is used to decrease the speed of the electric vehicle to zero or to a safe range, and the electric vehicle does not collide. In this case, the AEB system is disabled, and the AEB system stops activating a signal.

In a possible embodiment, in the process in which the drive motor outputs the reverse torque, the controller integrated with the AEB system performs further detection. When detecting that AEB is falsely triggered, the controller integrated with the AEB system sends an AEB system stop signal, to end the AEB process. How to detect false triggering is not limited in this application.

According to the solution of this application, when AEB is triggered, the drive system first outputs the reverse torque to brake the vehicle. A confirmation time period can be reserved for AEB, to reduce a false trigger rate of AEB, and improve vehicle safety.

According to a second aspect, this application provides a method for shortening an emergency braking distance of an electric vehicle. The method includes: after an automatic emergency braking system of the electric vehicle is triggered and before the automatic emergency braking system outputs a braking force in a traveling process of the electric vehicle, the drive motor of the electric vehicle outputs a reverse torque. The drive motor stops outputting the reverse torque in response to that a deceleration of the electric vehicle is greater than or equal to a preset deceleration after the automatic emergency braking system outputs the braking force.

With reference to the second aspect, in some implementations of the second aspect, after the automatic emergency braking system of the electric vehicle is triggered and before the automatic emergency braking system outputs the braking force, a deceleration of the electric vehicle in a process in which the drive motor outputs the reverse torque is less than the deceleration of the electric vehicle after the automatic emergency braking system outputs the braking force.

The drive motor outputs the reverse torque, so that a target deceleration generated by the electric vehicle is less than the deceleration generated by the electric vehicle due to the braking force output by the braking system. Such processing is performed, so that the braking system precedes, to avoid a case in which the braking force generated by the drive motor and the braking force output by the braking system simultaneously function, and consequently, the electric vehicle is locked, thereby improving vehicle safety.

According to a third aspect, this application provides an electric vehicle. The electric vehicle includes the motor control unit according to the first aspect and the implementations of the first aspect, a drive motor, and an automatic emergency braking system. After the automatic emergency braking system of the electric vehicle is triggered and before the automatic emergency braking system outputs a braking force in a traveling process of the electric vehicle, the drive motor of the electric vehicle outputs a reverse torque. The drive motor stops outputting the reverse torque in response to that a deceleration of the electric vehicle is greater than or equal to a preset deceleration after the automatic emergency braking system outputs the braking force.

A vehicle control unit is configured to: in the traveling process of the electric vehicle, in response to an automatic emergency braking AEB system enable signal, simultaneously control a drive system to output a reverse torque, and control the braking system to output a target braking force. The AEB system enable signal indicates to enable the AEB system. Simultaneously controlling the drive system to output the reverse torque and controlling the braking system to output the target braking force sequentially includes: The braking system starts to increase hydraulic pressure to increase the output braking force to the target braking force. The motor control unit is configured to control, before an output of the braking system reaches the target braking force, the drive motor to output the reverse torque. A direction of the reverse torque is opposite to a rotation direction of a rotor of the drive motor. After the output of the braking system reaches the target braking force, the motor control unit is used to control the drive motor to stop outputting the torque.

The electric vehicle includes a sensor. The sensor is configured to detect a distance between the electric vehicle and a front obstacle. The vehicle control unit is configured to send an alarm prompt in response to a case in which the distance that is between the electric vehicle and the front obstacle and that is detected by the sensor is less than an alarm distance and is greater than or equal to a distance threshold. The vehicle control unit is configured to: in response to that the distance that is between the electric vehicle and the front obstacle and that is detected by the sensor is less than the distance threshold, control the drive system to output the reverse torque and control the braking system to output the target braking force.

For beneficial effect of another aspect, refer to beneficial effect described in the first aspect. Details are not described herein again.

### BRIEF DESCRIPTION OF DRAWINGS

FIG. 1 is a diagram of an electric vehicle system architecture according to an embodiment of this application;
FIG. 2 is a diagram of an electric vehicle according to an embodiment of this application;
FIG. 3 is a diagram of AEB control according to an embodiment of this application;
FIG. 4 is a diagram of other AEB control according to an embodiment of this application;
FIG. 5 is a diagram of traveling of an electric vehicle according to an embodiment of this application; and
FIG. 6 is a diagram of an AEB control procedure according to an embodiment of this application.

### DESCRIPTION OF EMBODIMENTS

The following describes technical solutions of this application with reference to accompanying drawings. Detailed descriptions and accompanying drawings of the following embodiments are used to describe principles of this application as examples, but cannot be used to limit the scope of this application. In other words, this application is not limited to the described embodiments.

An automatic emergency braking (automatic emergency braking, AEB) system is a very important safety function. The system monitors a front vehicle and pedestrian by using radar and a camera. If a potential collision risk is detected, the system takes corresponding warning and braking measures, to avoid a collision or reduce an extent of damage caused by a collision. When a measured distance is less than an alarm distance, an alarm prompt is given; and when the measured distance is less than a safety distance, the AEB system is started, to automatically brake the vehicle, thereby ensuring safe travel. To avoid false triggering of AEB, a recognition distance is usually limited. In this way, a braking distance usually needs to be reduced.

In a possible implementation, AEB control completes an emergency stop process by using a hydraulic braking system. An execution process is as follows: In a scenario in which AEB is triggered, when an advanced driver assistance system (advanced driver assistance system, ADAS) determines that a distance from a front vehicle and obstacle is less than the safety distance, an ADAS controller delivers an AEB system enable signal, a target deceleration, or a target braking force to the braking system. Then, the braking system executes an AEB process based on the target deceleration or target braking force delivered by the ADAS, to control the vehicle to make an emergency stop.

It should be understood that, in the foregoing manner, AEB control is completed by the hydraulic braking system of the electric vehicle, and the hydraulic system needs to build up pressure, so that the brake caliper clamps a brake disc, to generate a vehicle braking force. This process usually needs to take a period of time of 200 milliseconds to 500 milliseconds, pressure build-up time is long, and a braking distance of AEB is increased due to non-timely braking. For example, if a vehicle speed is 80 km/h and pressure build-up needs to take 200 ms, a running distance of the vehicle without braking is 4.5 m.

Based on the foregoing problem, this application provides a motor control unit and method for shortening an emergency braking distance, and an electric vehicle. Within a time period in which a hydraulic braking force is not completely built up when AEB is triggered, a drive motor quickly responds to output a braking torque to reduce a vehicle speed, and a drive system and a braking system cooperate with each other, to shorten a braking distance of AEB or increase an AEB intervention vehicle speed when a braking distance of AEB remains unchanged, thereby reducing a false trigger rate of AEB, and improving vehicle safety.

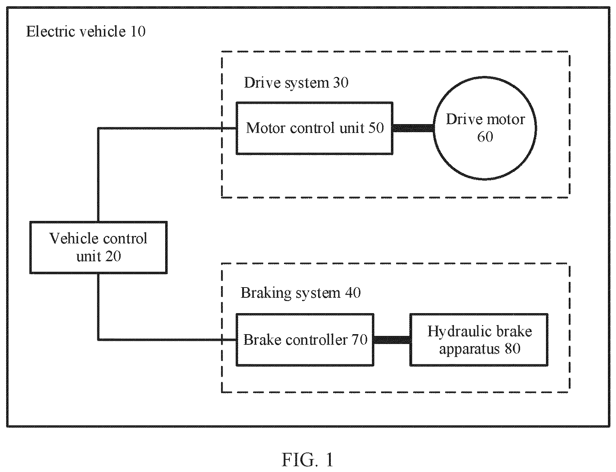

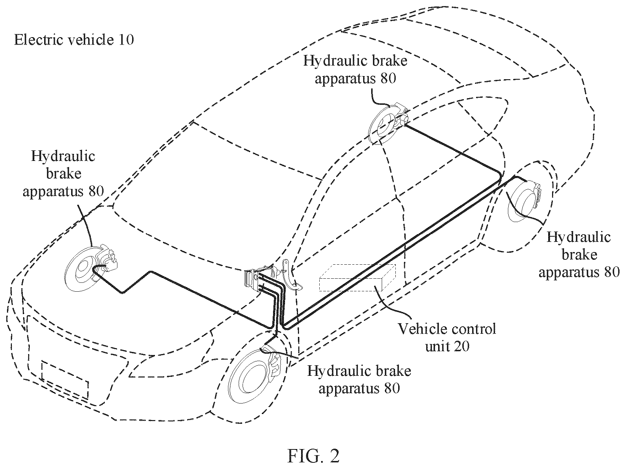

FIG. 1 and FIG. 2 each are a diagram of an architecture of an electric vehicle 10 according to an embodiment of this application.

As shown in FIG. 1, the electric vehicle 10 includes a vehicle control unit 20, a drive system 30, and a braking system 40. The drive system 30 includes a motor control unit 50 and a drive motor 60. The motor control unit 50 is configured to output a current to the drive motor 60, to control the drive motor 60 to output a positive torque to drive the electric vehicle 10. The braking system 40 is configured to output a braking force by building up hydraulic pressure, to brake the electric vehicle 10.

The electric vehicle 10 may be a drive architecture of a wheel-side four-drive motor. The drive motor 60 is disposed on a driven wheel side, and is controlled by a separate motor control unit 50. Alternatively, the electric vehicle 10 may be a drive architecture of a centralized drive motor, and two motors configured to drive two front wheels or two rear wheels are disposed together.

There may be one or more motor control units 50. The motor control unit 50 may be in a one-to-one correspondence with the drive motor 60, or one motor control unit 50 may alternatively correspond to a plurality of drive motors 60. The motor control unit 50 is configured to control one or more drive motors 60 to output a torque to drive the electric vehicle 10.

The motor control unit provided in this embodiment of this application may be any one of the plurality of motor control units. In the following embodiments, only one motor control unit is used as an example. Actions of another motor control unit may be understood similarly with reference to descriptions.

In an embodiment, the motor control unit 50 includes a signal interface, and the motor control unit 50 is connected to the vehicle control unit 20 and another motor control unit 50 through the signal interface. The vehicle control unit 20 is signal-connected to an accelerator pedal. The vehicle control unit 20 calculates a vehicle torque requirement based on an opening degree of the accelerator pedal of the electric vehicle 10 in a traveling process, and sends a torque signal to the motor control unit 50 based on the vehicle torque requirement. Each motor control unit 50 controls, based on an indication of the torque signal, a corresponding drive motor 60 to output a torque to drive a corresponding wheel.

In an embodiment, the motor control unit 50 is connected to a resolver sensor through the signal interface. The resolver sensor is configured to detect a rotation speed of the drive motor 60 controlled by the motor control unit 50. The motor control unit 50 is configured to receive a signal from the resolver sensor.

The resolver sensor can accurately detect a position, a direction, and a speed of a motor rotor, and is responsible for monitoring and extracting a rotation speed of the drive motor. The resolver sensor has a high sampling rate and is directly signal-connected to the motor control unit 50.

As shown in FIG. 2, the braking system 40 includes a brake controller 70 and a plurality of hydraulic brake apparatuses 80, and the brake controller 70 is signal-connected to the brake pedal 120. The brake controller 70 may be configured to determine a braking force based on an opening degree of the brake pedal 120. In a driving process of a driver, when the electric vehicle 10 needs to brake, the driver presses down the brake pedal. The brake controller 70 receives a brake pedal signal from the brake pedal 120, and outputs a braking force allocation signal to the hydraulic brake apparatus 80. The hydraulic brake apparatus 80 is configured to: receive the braking force allocation signal, build up hydraulic pressure based on an indication of the braking force allocation signal, and output a clamping force to a brake disc, to generate a frictional braking force, so that the electric vehicle 10 brakes.

In an embodiment, the vehicle control unit 20 is connected to the brake pedal 120. The vehicle control unit 20 calculates a vehicle braking requirement based on an opening degree of the brake pedal of the electric vehicle 10 in the traveling process, and sends a brake signal to the brake controller 70 based on the vehicle braking requirement. The brake controller 70 controls a corresponding hydraulic brake apparatus based on an indication of the brake signal, to brake a corresponding wheel.

The electric vehicle further includes an automatic emergency braking AEB system, and the AEB system is configured to output a braking force after being triggered, to brake the electric vehicle. The AEB system may be provided with a separate controller, or may be integrated in a vehicle control unit 20 or an advanced driver assistance system (advanced driver assistance system, ADAS) controller. When determining that the AEB system is triggered, a controller integrated with the AEB system sends an AEB system enable signal to the vehicle control unit 20 and/or the motor control unit 50. The AEB system enable signal indicates to activate AEB to make an automatic stop.

The controller integrated with the AEB system sends a related signal to the motor control unit 50, and may communicate through a controller local area network (controller area network, CAN), or may use another communication manner.

In an embodiment, the electric vehicle 10 includes a sensor. The sensor is configured to detect a distance between the electric vehicle 10 and a front obstacle. The vehicle control unit 20 is configured to send an alarm prompt in response to a case in which the distance that is between the electric vehicle 10 and the front obstacle and that is detected by the sensor is less than an alarm distance and is greater than or equal to a distance threshold. The vehicle control unit 20 is configured to: in response to that the distance that is between the electric vehicle 10 and the front obstacle and that is detected by the sensor is less than the distance threshold, control the drive system 30 to output a reverse torque and control the braking system 40 to output a target braking force.

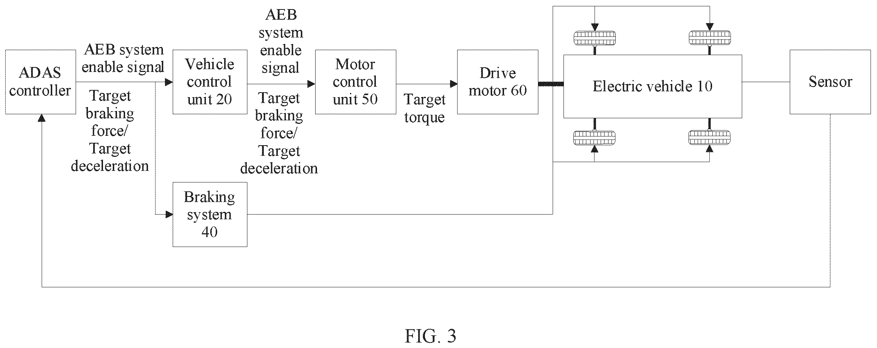

FIG. 3 is a schematic flowchart of shortening an emergency braking distance according to an embodiment of this application.

As shown in FIG. 3, the vehicle control unit 20 is configured to: in the traveling process of the electric vehicle 10, in response to the automatic emergency braking AEB system enable signal, simultaneously control the drive system 30 to output the reverse torque, and control the braking system 40 to output the target braking force. The AEB system enable signal indicates to trigger the AEB system.

The controller integrated with the AEB system, for example, the ADAS controller, simultaneously delivers the AEB system enable signal and the target braking force or a target deceleration to the braking system 40 and the drive system 30.

The controller integrated with the AEB system delivers the related signal to the motor control unit 50, and may use conventional CAN communication or another faster communication manner, to reduce a communication delay and further reduce an AEB braking distance.

The vehicle control unit 20 is configured to send a reverse torque signal to the motor control unit 50. The reverse torque signal indicates a target torque. A reverse torque indicated by the reverse torque signal has a preset value.

The vehicle control unit 20 is configured to send a braking signal to the braking system 40. The braking signal indicates a target braking force.

It should be understood that, regardless of a vehicle speed of the electric vehicle 10, after AEB is triggered, it is usually expected that a deceleration generated during emergency braking is as large as possible. The target torque and the target braking force may correspond to an attachment coefficient of contact with a wheel, and may be obtained through calibration. When the drive motor outputs the target torque or the braking system outputs the target braking force, the electric vehicle 10 may obtain a braking force and a deceleration that are as large as possible.

After AEB is triggered, to be specific, the braking system 40 receives the AEB system enable signal, the braking system 40 starts to increase the hydraulic pressure to increase the output braking force to the target braking force.

The brake controller 70 controls the hydraulic brake apparatus to start to build up the hydraulic pressure. A piston in a main cylinder is pushed to compress a brake fluid in a brake booster. After the brake fluid is compressed, hydraulic pressure is generated. This pressure is transferred to a brake sub-pump of each wheel through a brake pipeline. After the brake sub-pump (also referred to as a brake cylinder or a wheel cylinder) is subject to the hydraulic pressure, a piston in the sub-pump is pushed outward. Movement of the piston in the sub-pump pushes a brake part (for example, a brake pad in a brake caliper) in a brake to be in contact with a brake disc, to generate a braking force. A braking force is generated due to a friction force between the brake pad and the brake disc, and the force is applied to the wheel, so that the wheel decelerates or stops rotating.

In this process, the braking system 40 cannot output the braking force or cannot output the target braking force.

The motor control unit 50 is configured to: before an output of the braking system reaches the target braking force, increase an output current to control the drive motor 60 to output a reverse torque within preset duration. A direction of the reverse torque is opposite to a rotation direction of a rotor of the drive motor 60.

In the traveling process of the electric vehicle 10, the motor control unit 50 is configured to control the drive motor 60 to output the reverse torque after the automatic emergency braking system is triggered and before the automatic emergency braking system outputs the braking force in the traveling process of the electric vehicle 10. The direction of the reverse torque is opposite to a rotation speed direction of the drive motor.

The motor control unit 50 may output a three-phase alternating current to the drive motor, to control the drive motor 60 to output a torque. The drive motor 60 includes a stator winding and a rotor. The motor control unit 50 outputs an alternating current to a three-phase stator winding, to control the drive motor 60 to output the torque. The motor control unit 50 can change intensity and a direction of a magnetic field of a stator by adjusting a magnitude of a current input into the stator winding and a phase of the three-phase current, thereby changing an interaction force between the stator and the rotor, that is, controlling the torque output by the drive motor 60. The reverse torque may also be referred to as a negative torque. The positive torque is used to drive the vehicle, and the negative torque is used to brake the vehicle. The motor control unit 50 may change the phase of the three-phase current output to the drive motor 60, so that the rotor cuts a magnetic field generated by the stator winding. Kinetic energy of the rotor is converted into electric energy and input to a power battery. In this case, the drive motor 60 outputs the negative torque. The motor control unit 50 changes a magnitude of the three-phase current output to the drive motor 60, to increase or decrease the positive torque or the negative torque output by the motor.

It should be understood that, for the electric vehicle 10 having the plurality of drive motors, if AEB is triggered, drive motors 60 that drive coaxial wheels, for example, two drive motors 60 that respectively drive two front wheels or two drive motors that respectively drive two rear wheels, need to output equal reverse torques, to avoid a case in which a yaw torque occurs, and consequently, the vehicle is out of control. Therefore, in a case of an electric vehicle 10 in which a plurality of motor control units 50 respectively control a plurality of drive motors 60, the motor control units 50 need to control reverse torques output by the drive motors 60 to be equal to reverse torques output by drive motors 60 that drive coaxial wheels.

It needs to take a period of time for the braking system 40 from starting to build up hydraulic pressure to outputting the braking force. In this period of time, the electric vehicle 10 is not decelerated by the braking force. However, the drive motor 60 does not need to build up pressure, and a torque control response time period is less than a time period in which the braking system 40 builds up pressure. Therefore, the motor control unit 50 may control the drive motor to output the reverse torque when the braking system 40 builds up pressure, to quickly brake the electric vehicle 10.

In an embodiment, the motor control unit is configured to: after the drive motor outputs the reverse torque for preset duration, control the drive motor to stop outputting the torque. A deceleration of the electric vehicle 10 within the preset duration is less than a deceleration of the electric vehicle 10 in a process in which the automatic emergency braking system outputs the braking force after the preset duration.

In some possible embodiments, the preset duration may be equal to the time period in which the braking system builds up pressure, that is, duration from receiving the AEB system enable signal to outputting the braking force by the braking system. The preset duration may be obtained through calibration based on performance of the vehicle braking system.

It should be understood that the preset duration may be equal to the time period in which the braking system builds up pressure, that is, duration from receiving the AEB system enable signal to outputting the braking force by the braking system. The preset duration may be obtained through calibration based on performance of the vehicle braking system.

The motor control unit 50 may not be signal-connected to the braking system 40, and the motor control unit 50 may not need to detect when the braking system 40 completes pressure build-up to output the braking force, but only needs to control, within the preset duration after receiving the AEB system enable signal, the drive motor 60 to output the reverse torque, and after outputting the reverse torque for the preset duration, controls the drive motor 60 to stop outputting the torque, to avoid overlapping with the braking force output by the braking system 40.

In a possible setting manner, the preset duration is less than or equal to 500 milliseconds.

The electric vehicle 10 relies on the braking system 40 to complete an entire process of AEB, and the braking system 40 requires a hydraulic system to build up pressure, so that a brake caliper clamps a brake disc, to generate a vehicle braking force. Such a pressure build-up process usually needs to take 200 milliseconds to 500 milliseconds, and a pressure build-up time period is long. During this period of time, the motor control unit 50 may control the drive motor 60 to output the reverse torque to brake the electric vehicle 10. Therefore, the specified preset duration may be less than or equal to 500 milliseconds.

In some other possible embodiments, the preset duration may alternatively be equal to a time of an entire AEB automatic braking process, that is, duration from receiving the AEB system enable signal to stop the electric vehicle 10. If the electric controller operates in the entire process, the reverse torque decreases after the braking system outputs the braking force. In addition, a long-time operation capability of the drive motor and a kinetic energy recovery capability of a power battery also need to be considered.

In an embodiment, the motor control unit 50 is configured to control the drive motor 60 to output the reverse torque until a speed of the electric vehicle 10 decreases to zero.

The motor control unit 50 may control the drive motor 60 to output the reverse torque, in a time period of an entire process from triggering of AEB to automatic braking to a stop. Before outputting the braking force, the braking system may output a large reverse torque to compensate for a blank time period of the braking force. After starting to output the braking force, the braking system 40 decreases the reverse torque. If the electric controller 50 operates in the entire process, a long-time operation capability of the drive motor and a kinetic energy recovery capability of the power battery also need to be considered.

In a process in which the motor control unit 50 controls the drive motor to output the reverse torque, a deceleration of the electric vehicle 10 before the emergency braking system outputs the braking force is less than a deceleration of the electric vehicle 10 after the emergency braking system outputs the braking force.

The reverse torque output by the drive motor 60 should not be too large. After the emergency braking system starts to output the braking force, the deceleration of the electric vehicle 10 increases quickly. The braking system needs to mainly perform braking, to avoid a case in which the wheel is locked and traveling safety of the electric vehicle 10 is affected.

According to the solution of this application, in the AEB scenario, the drive system and the braking system cooperate to work, to shorten the emergency braking distance. In addition, the braking system precedes, to avoid locking the wheel due to simultaneous functioning, thereby improving vehicle safety.

In an embodiment, the motor control unit 50 is configured to: in a process of controlling the drive motor 60 to output the reverse torque, in response to that the automatic emergency braking system outputs the braking force and a deceleration of the electric vehicle 10 is greater than or equal to a preset deceleration, control, by the motor control unit 50, the drive motor 60 to stop outputting the reverse torque.

The motor control unit 50 may be signal-connected to the braking system 40 or the vehicle control unit 20. When the automatic emergency braking system starts to output the braking force, the deceleration of the electric vehicle 10 increases quickly. When the braking force output by the braking system 40 causes the electric vehicle 10 to generate an enough deceleration, the motor control unit 50 may control the drive motor to stop outputting the reverse torque and exit braking in a timely manner, to avoid a case in which there is an overlap with the braking force output by the braking system 40 and the wheel is locked.

According to the solution of this application, in the AEB scenario, the drive system and the braking system cooperate to work, to sequentially generate the braking force, so that the electric vehicle 10 quickly reaches the target deceleration, to shorten the emergency braking distance. In addition, the braking system precedes, to avoid locking the wheel due to simultaneous functioning, thereby improving vehicle safety.

In an embodiment, in a process in which the motor control unit 50 is configured to control the drive motor 60 to output the reverse torque before the automatic emergency braking system outputs the braking force, the deceleration of the electric vehicle 10 is less than the preset deceleration or a deceleration of the drive motor is less than the preset deceleration.

The deceleration of the drive motor may be understood as a deceleration of a motor rotation speed. There is usually a correspondence between the motor rotation speed and a vehicle speed. Therefore, the deceleration of the electric vehicle 10 may be calculated based on the deceleration of the motor rotation speed. The reverse torque output by the drive motor 60 should not be too large. After the emergency braking system starts to output the braking force, the deceleration of the electric vehicle 10 increases quickly. The braking system 40 needs to mainly perform braking, to avoid a case in which the wheel is locked and traveling safety of the electric vehicle 10 is affected.

In an embodiment, the motor control unit 50 is configured to: in a process in which the braking force output by the automatic emergency braking system increases from zero, control, by the motor control unit 50, the reverse torque output by the drive motor 60 to decrease to zero.

Because it needs to take a specific period of time for the braking system 40 of the electric vehicle 10 to build up the hydraulic pressure to output the braking force, in this period of time, the motor control unit 50 needs to control the drive motor 60 to output the reverse torque for compensation. When the braking force output after the braking system 40 of the electric vehicle 10 builds up the braking force gradually increases, the reverse torque of the drive motor 60 may gradually stop, and the braking system 40 continues to brake to complete a remaining emergency braking process. Braking by the drive system smoothly transitions to braking by braking.

The motor control unit 50 is configured to control a magnitude of the reverse torque output by the drive motor 60 to be less than or equal to a torque limit.

The torque limit is a maximum reverse torque capability that can be output by the drive motor 60 at an AEB trigger moment. The torque limit is related to a capability of hardware and a safety value of the reverse torque output by the drive motor 60 when the hardware and the vehicle safety are ensured at the vehicle speed. The torque limit may be obtained through calibration based on vehicle performance of the vehicle, and may be preset.

In an embodiment, after the automatic emergency braking system of the electric vehicle 10 is triggered and before the automatic emergency braking system outputs the braking force in the traveling process of the electric vehicle 10, the motor control unit 50 is configured to receive a reverse torque signal. A reverse torque indicated by the reverse torque signal has a preset value. The motor control unit 50 is configured to: in response to that the reverse torque indicated by the reverse torque signal is less than or equal to the torque limit, control the drive motor 60 to output the reverse torque indicated by the reverse torque signal. The motor control unit 50 is configured to: in response to that the reverse torque indicated by the reverse torque signal is greater than the torque limit, control the drive motor 60 to output a reverse torque corresponding to the torque limit.

When AEB is triggered, the controller integrated with the AEB system sends the AEB system enable signal and a required total braking force to the vehicle control unit 20 and the brake controller 70. After receiving the AEB system enable signal and the total braking force, the vehicle control unit 20 transparently transmits the AEB system enable signal and the total braking force to the motor control unit 50. After the motor control unit 50 receives the reverse torque signal sent by the vehicle control unit 20, the reverse torque signal indicates a braking force that is allocated to the drive system 30 and that needs to be output, and the motor control unit 50 determines, based on the reverse torque signal, a magnitude of a reverse torque that finally needs to be output.

The torque limit is a maximum reverse torque capability that can be output by the drive motor 60 at an AEB trigger moment. The torque limit is related to a capability of hardware and a safety value of the reverse torque output by the drive motor 60 when the hardware and the vehicle safety are ensured at the vehicle speed. The torque limit may be obtained through calibration based on vehicle performance of the vehicle, and may have a preset value.

After receiving the AEB system enable signal, the motor control unit 50 immediately controls the drive motor 60 to generate a reverse torque that does not exceed a total braking force determined by the AEB system. The reverse torque is the maximum reverse torque capability of the drive motor 60 and a minimum absolute value of the total braking force. When the absolute value of the target torque indicated by the vehicle control unit 20 is greater than the absolute value of the torque limit, it indicates that the drive motor 60 cannot achieve a target indicated by the vehicle control unit 20, and can only output the reverse torque as much as possible. In this case, the motor control unit 50 controls the drive motor 60 to output the reverse torque corresponding to the torque limit. When the absolute value of the target torque indicated by the vehicle control unit 20 is less than or equal to the absolute value of the torque limit, it indicates that the drive motor 60 is capable of completing a target braking force allocated by the vehicle control unit 20. In this case, only the target torque allocated by the vehicle control unit 20 needs to be output. In this case, the motor control unit 50 controls the drive motor 60 to output the target torque indicated by the reverse torque signal.

According to the solution of this application, the reverse torque is output within a capability range of the drive system 30, so that safety of the electric vehicle 10 is ensured as much as possible while the electric vehicle 10 quickly achieves the target deceleration, thereby shortening the emergency braking distance and improving safety.

In a process in which the motor control unit 50 is configured to control the drive motor 60 to output the reverse torque, a magnitude of the reverse torque output by the drive motor 60 does not change with an opening degree of an accelerator pedal of the electric vehicle 10.

The motor control unit 50 is configured to: in the traveling process of the electric vehicle 10, control the drive motor 60 to output a torque indicated by the opening degree of the accelerator pedal of the electric vehicle 10. In response to the AEB system enable signal, the motor control unit 50 controls the torque output by the drive motor 60 to be different from the torque indicated by the opening degree of the accelerator pedal.

When the AEB system is not triggered, the motor control unit 50 controls, based on the torque indicated by the opening degree of the accelerator pedal, the drive motor 60 to output the torque, so that the electric vehicle 10 travels normally. When the AEB system is triggered, the motor control unit 50 performs AEB braking control in response to the AEB system enable signal, and does not respond to the opening degree of the accelerator pedal to control the drive motor 60, but directly adjusts the torque output by the drive motor 60.

According to the solution of this application, the motor control unit directly performs control during emergency braking, so that a communication delay is low, a response time period is short, and safety of the electric vehicle 10 is improved.

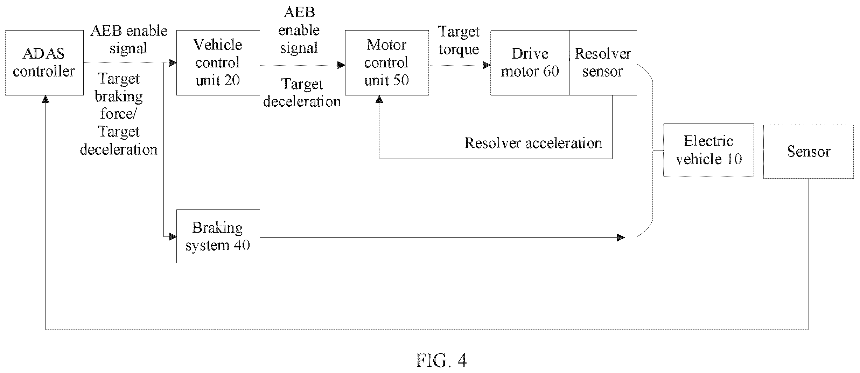

As shown in FIG. 4, in an embodiment, the vehicle control unit 20 indicates the target deceleration to the motor control unit 50. The motor control unit 50 is configured to: within the preset duration, in response to that an actual deceleration that is of the drive motor 60 and that is indicated by a resolver sensor is less than a target deceleration indicated by the vehicle control unit 20, control the drive motor 60 to increase the output reverse torque.

After receiving the AEB trigger signal, the motor control unit 50 obtains the target deceleration indicated by the vehicle control unit 20, obtains the actual deceleration of the drive motor 60 based on a resolver signal sent by the resolver sensor, performs closed-loop control on the target deceleration of the drive motor 60 and the actual deceleration of the drive motor 60, adjusts the torque output by the drive motor 60, and continuously performs closed-loop control in an emergency braking process. When the actual deceleration that is of the drive motor 60 and that is indicated by the resolver sensor is less than the target deceleration indicated by the vehicle control unit 20, the motor control unit 50 increases an output current to control the drive motor to increase the output reverse torque. When the actual deceleration that is of the drive motor 60 and that is indicated by the resolver sensor is greater than the target deceleration indicated by the vehicle control unit 20, the motor control unit 50 decreases the output current to control the drive motor 60 to reduce the output reverse torque.

A deceleration generated by the electric vehicle 10 due to the target braking force is greater than a deceleration generated by the electric vehicle 10 due to the reverse torque.

The drive motor 60 outputs the reverse torque, so that the target deceleration generated by the electric vehicle 10 is less than the deceleration generated by the electric vehicle 10 due to the braking force output by the braking system 40. Such processing is performed, so that the braking system precedes, to avoid a case in which the braking force generated by the drive motor 60 and the braking force output by the braking system 40 simultaneously function, and consequently, the wheel of the electric vehicle 10 is locked, thereby improving vehicle safety.

For example, the motor control unit 50 process the target deceleration of the entire vehicle, to obtain the target deceleration of the drive motor 60. The target deceleration of the drive motor 60 is equal to the target deceleration of the entire vehicle minus a specified value δ. Herein, δ is greater than 0. For example, if the target deceleration of the entire vehicle is 9 m/s², and δ is 2 m/s², the target deceleration of the drive motor 60 is 7 m/s².

When AEB is triggered and the braking force of the braking system 40 is not built up, the deceleration of the electric vehicle 10 is very small, and the drive motor quickly outputs the reverse torque in a closed loop. After the braking force of the braking system 40 is built up, a vehicle deceleration reaches the target deceleration, and is greater than the target deceleration of the drive motor 60. A closed-loop system of the drive motor 60 quickly exits the reverse torque, so that the drive system 30 smoothly cooperates with the braking system 40. A closed-loop control output limit of the drive motor is from a maximum negative torque of the drive motor to 0.

After the output of the braking system 40 reaches the target braking force, the motor control unit 50 is used to control the drive motor 60 to stop outputting the torque.

In an embodiment, the motor control unit 50 is further configured to: after the drive motor 60 is controlled to output the reverse torque for preset duration, control the drive motor 60 to stop outputting the torque.

The motor control unit 50 is specifically configured to: in the traveling process of the electric vehicle 10, in response to the AEB system enable signal, before the AEB system outputs the braking force to the electric vehicle 10, control the drive motor 60 to output the reverse torque within the preset duration. After the preset duration, the AEB system outputs the braking force, and controls the drive motor 60 to stop outputting the torque.

According to the solution of this application, when AEB is triggered, the motor control unit controls, by using a quick response, the drive motor to output the reverse torque, to compensate for a lack of a hydraulic braking force in specific duration. In this way, a braking distance in a vehicle AEB scenario is shortened without increasing hardware costs of the vehicle, and vehicle safety is improved.

In an embodiment, the motor control unit 50 is further configured to: in a process in which the drive motor 60 outputs the reverse torque, in response to that the automatic emergency braking system is disabled, control the drive motor 60 to stop outputting the reverse torque.

In the process in which the drive motor 60 outputs the reverse torque, if the AEB process ends in advance, the motor control unit 50 controls the drive motor 60 to stop outputting the reverse torque.

In the process in which the drive motor outputs the reverse torque, the controller integrated with the AEB system performs further detection. When detecting that AEB is falsely triggered, the controller integrated with the AEB system sends an AEB system stop signal, to end the AEB process. Therefore, the braking system 40 does not need to output the braking force again. How to detect false triggering is not limited in this application.

According to the solution of this application, when AEB is triggered, the drive system first outputs the reverse torque to brake the vehicle. A confirmation time period can be reserved for AEB, to reduce a false trigger rate of AEB, and improve vehicle safety.

This application provides a method for shortening an emergency braking distance of an electric vehicle.

The method may be applied to the foregoing electric vehicle 10.

The control method includes: After an automatic emergency braking system of the electric vehicle 10 is triggered and before the automatic emergency braking system outputs a braking force in a traveling process of the electric vehicle 10, a drive motor 60 of the electric vehicle 10 outputs a reverse torque. The drive motor 60 stops outputting the reverse torque in response to that a deceleration of the electric vehicle 10 is greater than or equal to a preset deceleration after the automatic emergency braking system outputs the braking force.

In an embodiment, after the automatic emergency braking system of the electric vehicle 10 is triggered and before the automatic emergency braking system outputs the braking force, a deceleration of the electric vehicle 10 in a process in which the drive motor 60 outputs the reverse torque is less than the deceleration of the electric vehicle 10 after the automatic emergency braking system outputs the braking force.

According to the solution of this application, a response time period of outputting the torque by the drive motor 60 is usually within 50 ms. A drive system 30 and a braking system 40 cooperate with each other, so that a braking distance of AEB can be shortened when an initial vehicle speed remains unchanged, or an intervention vehicle speed can be increased when a braking distance of AEB remains unchanged, thereby further improving vehicle safety. In addition, a confirmation time period can be reserved for AEB, to reduce a false trigger rate of AEB.

For example, a target deceleration of AEB is -0.9g, and a braking force that can be provided by the drive motor is -0.4g. Braking distance shortening values of AEB triggered at different vehicle speeds of the electric vehicle 10 are shown in Table 1.

**Table 1: Shortening of an emergency braking distance at different vehicle speeds for triggering AEB**

| Vehicle speed (km/h) for triggering AEB | Braking distance shortening value (m) in the method in this application |
|---|---|
| 90 | 2.266667 |
| 80 | 2.019753 |
| 70 | 1.77284 |
| 60 | 1.525926 |
| 50 | 1.279012 |

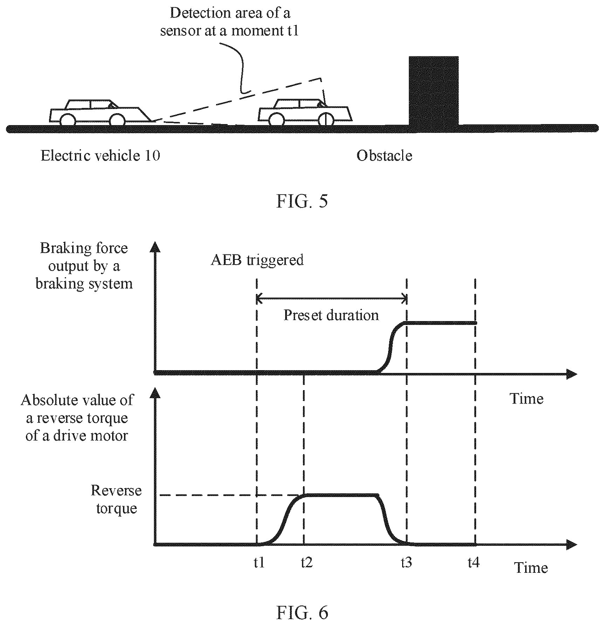

The following describes a possible AEB braking process with reference to FIG. 5 and FIG. 6.

As shown in FIG. 5, in the traveling process of the electric vehicle 10, a sensor continuously detects a distance from a front vehicle or obstacle, and then compares the measured distance with an alarm distance and a safety distance by using a data analysis module. When the measured distance is less than the alarm distance, an alarm prompt is given.

As shown in FIG. 5 and FIG. 6, at a moment t1, the sensor detects that the distance between the electric vehicle 10 and the front obstacle is less than a distance threshold, and an AEB system is triggered.

A controller integrated with the AEB system simultaneously sends a total target braking force and an AEB system enable signal to the drive system 30 and the braking system 40.

In response to the AEB system enable signal, the vehicle control unit 20 simultaneously controls the drive system 30 to output the reverse torque, and controls the braking system 40 to output the target braking force.

In response to the AEB system enable signal, the braking system 40 starts to build up hydraulic pressure at the moment t1. In this case, the braking system 40 cannot output a braking force or outputs a very small braking force.

In response to that AEB is triggered, the motor control unit 50 in the drive system 30 controls, at the moment t1, the drive motor 60 to output the reverse torque within preset duration, and the drive motor 60 starts to respond at the moment t1 to adjust a torque output, and an indicated reverse torque is reached at a moment t2. Duration from the time point t1 to the time point t2 is a response time period of the motor control unit 50 and the drive motor 60, and is usually about 50 milliseconds.

After the drive motor 60 outputs the reverse torque, the speed of the electric vehicle 10 starts to decrease.

At a moment t3, the braking system 40 completes pressure build-up, and starts to output the target braking force, the vehicle deceleration reaches the target deceleration, and the drive motor 60 performs closed-loop control to quickly stop the torque output, so that the drive system 30 smoothly cooperates with the braking system 40. A preset time period from t1 to t3 is pressure build-up duration of the braking system 40.

At a moment t4, the speed of the electric vehicle 10 decreases to 0 or reaches a speed at which no collision occurs, and the entire AEB process is completed.

According to this application, within a time period in which a hydraulic braking force is not completely built up when AEB is triggered, the drive motor quickly responds to output a braking torque to reduce the vehicle speed, and the drive system and the braking system cooperate with each other, to shorten the braking distance of AEB or increase the AEB intervention vehicle speed when the braking distance of AEB remains unchanged, thereby reducing the false trigger rate of AEB, and improving vehicle safety.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in another manner. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor control unit for shortening an emergency braking distance, wherein the motor control unit is used in an electric vehicle, the motor control unit is configured to control a drive motor of the electric vehicle to output a positive torque to drive a wheel of the electric vehicle, the electric vehicle further comprises an automatic emergency braking system, and the automatic emergency braking system is configured to output a braking force after being triggered, to brake the electric vehicle; and
the motor control unit is further configured to control the drive motor to output a reverse torque after the automatic emergency braking system is triggered and before the automatic emergency braking system outputs the braking force in a traveling process of the electric vehicle, wherein a direction of the reverse torque is opposite to a rotation speed direction of the drive motor.

2. The motor control unit according to claim 1, wherein the motor control unit is configured to control the drive motor to output the reverse torque until a speed of the electric vehicle decreases to zero.

3. The motor control unit according to claim 2, wherein in a process in which the motor control unit controls the drive motor to output the reverse torque, a deceleration of the electric vehicle before the emergency braking system outputs the braking force is less than a deceleration of the electric vehicle after the emergency braking system outputs the braking force.

4. The motor control unit according to claim 1, wherein the motor control unit is configured to:
in a process of controlling the drive motor to output the reverse torque, in response to that the automatic emergency braking system outputs the braking force and a deceleration of the electric vehicle is greater than or equal to a preset deceleration, control the drive motor to stop outputting the reverse torque.

5. The motor control unit according to claim 4, wherein in a process in which the motor control unit is configured to control the drive motor to output the reverse torque before the automatic emergency braking system outputs the braking force, the deceleration of the electric vehicle is less than the preset deceleration or a deceleration of the drive motor is less than the preset deceleration.

6. The motor control unit according to claim 4, wherein the motor control unit is configured to:
in a process in which the braking force output by the automatic emergency braking system increases from zero, control the reverse torque output by the drive motor to decrease to zero.

7. The motor control unit according to claim 1, wherein the motor control unit is configured to:
after the drive motor outputs the reverse torque for preset duration, control the drive motor to stop outputting the torque, wherein
a deceleration of the electric vehicle within the preset duration is less than a deceleration of the electric vehicle in a process in which the automatic emergency braking system outputs the braking force after the preset duration.

8. The motor control unit according to any one of claims 1 to 7, wherein the motor control unit is configured to control a magnitude of the reverse torque output by the drive motor to be less than or equal to a torque limit.

9. The motor control unit according to claim 8, wherein after the automatic emergency braking system of the electric vehicle is triggered and before the automatic emergency braking system outputs the braking force in the traveling process of the electric vehicle, the motor control unit is configured to receive a reverse torque signal, wherein a reverse torque indicated by the reverse torque signal has a preset value; and
the motor control unit is configured to:
in response to that the reverse torque indicated by the reverse torque signal is less than or equal to the torque limit, control the drive motor to output the reverse torque indicated by the reverse torque signal; or
in response to that the reverse torque indicated by the reverse torque signal is greater than the torque limit, control the drive motor to output a reverse torque corresponding to the torque limit.

10. The motor control unit according to claim 1, wherein in a process in which the motor control unit is configured to control the drive motor to output the reverse torque, a magnitude of the reverse torque output by the drive motor does not change with an opening degree of an accelerator pedal of the electric vehicle.

11. The motor control unit according to claim 1, wherein the motor control unit is configured to:
in response to that an actual deceleration that is of the drive motor and that is indicated by a resolver sensor is less than a target deceleration, control the drive motor to increase the output reverse torque.

12. The motor control unit according to claim 1, wherein the motor control unit is further configured to:
in a process in which the drive motor outputs the reverse torque, in response to that the automatic emergency braking system is disabled, control the drive motor to stop outputting the reverse torque.

13. A method for shortening an emergency braking distance of an electric vehicle, wherein the method comprises:
after an automatic emergency braking system of the electric vehicle is triggered and before the automatic emergency braking system outputs a braking force in a traveling process of the electric vehicle, outputting, by a drive motor of the electric vehicle, a reverse torque; and
stopping, by the drive motor, outputting the reverse torque in response to that a deceleration of the electric vehicle is greater than or equal to a preset deceleration after the automatic emergency braking system outputs the braking force.

14. The method according to claim 13, wherein after the automatic emergency braking system of the electric vehicle is triggered and before the automatic emergency braking system outputs the braking force, a deceleration of the electric vehicle in a process in which the drive motor outputs the reverse torque is less than the deceleration of the electric vehicle after the automatic emergency braking system outputs the braking force.

15. An electric vehicle, wherein the electric vehicle comprises the motor control unit according to any one of claims 1 to 12, a drive motor, and an automatic emergency braking system;
after the automatic emergency braking system of the electric vehicle is triggered and before the automatic emergency braking system outputs a braking force in a traveling process of the electric vehicle, the drive motor of the electric vehicle outputs a reverse torque; and
the drive motor stops outputting the reverse torque in response to that a deceleration of the electric vehicle is greater than or equal to a preset deceleration after the automatic emergency braking system outputs the braking force.
